# EUROPEAN PATENT SPECIFICATION

(11) **EP 0 379 751 B1**
(45) Date of publication and mention of the grant of the patent: **19.04.1995**
(21) Application number: 89203253.3
(22) Date of filing: 19.12.1989
(51) Int. Cl.: C08J 3/215, C08J 3/22, C09B 67/42, C09B 67/20, C09C 3/10, C08K 9/04

(54) **Method for the production of a pulverulent composition containing dyestuff and/or pigment and products obtained using such a composition**
Verfahren zur Herstellung von pulverförmigen Zusammensetzungen, die Farbstoffe und/oder Pigmente enthalten und die unter Verwendung dieser Zusammensetzungen erthaltenen Produkte
Procédé de fabrication de compositions pulvérulentes contenant des colorants et/ou des pigments et les produits obtenus en utilisant ces compositions

(30) Priority: 27.12.1988 NL 8803178
(43) Date of publication of application: 01.08.1990
(73) Proprietor: Holland Colours N.V., NL-7323 RW Apeldoorn (NL)
(72) Inventor: Bes, Richard François Theodor, NL-7341 DK Apeldoorn (NL); Knol, Jan Dirk, NL-7345 CJ Apeldoorn (NL); Ubbink, Marten Theodoor, NL-7312 DX Apeldoorn (NL)
(74) Representative: van der Kloet-Dorleijn, Geertruida W.F., Drs.

(56) References cited:
- EP-A- 0 116 666
- EP-A- 0 263 460
- EP-A- 0 266 676
- FR-A- 2 174 088
- FR-A- 2 282 459
- FR-A- 2 460 311
- FR-A- 2 474 520
- GB-A- 2 055 115
- US-A- 3 844 810
- US-A- 4 230 501
- US-A- 4 634 471

## Description

The invention relates to a method for the production of a pulverulent composition containing dyestuff and/or pigment particles, by mixing an aqueous paste containing said particles with a plastic emulsion and removing water from said mass.

A method of this type is known from EP-A-0 166 666. According to this method, it is known to prepare colouring concentrates, by dispersion of a dye in a plastic/water mixture, filtration of said suspension and drying.

Applicant now found that a pretreatment of the dyestuff and/or pigment particles in a plastic emulsion, and thereafter the coating of the obtained particles with a wax composition, results in particles having a high colouring power.

According to the method of the invention a product is obtained having a very high concentration of dyestuff and/or pigment particles.

The method of the invention is characterized in that an aqueous paste containing dyestuff and/or pigment composition particles is obtained by finely grinding dyestuff and/or pigment particles in water to form a stable suspension or paste having said particles in a de-agglomerated state, and wherein, after said mixing with a plastic emulsion followed by said removal of water, said mass is pulverized and mixed with a molten wax to form a mixture of said molten wax and said particles; spraying the thus obtained mixture of molten wax and said particles and solidifying said mixture in particulate form.

It is remarked that it is known from US-A-3.844.810 to mix pigment particles with a melted fatty acid amide, to solidify the material by cooling it, to grind the material and to separate out the fines to obtain coated pigment particles to be used for colouring thermoplastic materials. According to this prior art process the grinding is thus effected with the coated pigment particles; moreover a pretreatment to obtain a stable aqueous suspension or paste is not mentioned or suggested.

According to the invention the aqueous paste containing dyestuff and/or pigment particles is obtained by finely grinding dyestuff and/or pigment particles in water with the formation of a stable suspension or paste.

The aqueous suspension or paste thus obtained is mixed, as indicated above, with a plastic emulsion or suspension. The plastic emulsion or suspension is preferably chosen from polyvinyl chloride, polystyrene, polyethene or polyvinyl acetate. Other plastics or mixtures of plastics can of course also be used, provided that they are compatible with the plastics to be coloured.

It is pointed out that in the case of an emulsion it is a fine distribution of a liquid in another liquid which is concerned, whereas a suspension is a fine distribution of a solid substance in a liquid. However, the use of these expressions in the present description should not be regarded as restricting in the sense that it is not always possible to establish the exact form.

The dyestuff or the pigment is more particularly chosen from the spinel pigments, carbon black and organic pigments and transparent iron oxide.

Such pigments keep their full colouring power even at high temperature and thus do not fade at elevated temperatures.

According to the method of the invention, the pulverulent dyestuff and/or pigment composition particles can be dispersed in a molten wax composition.

It is pointed out that it is known per se to prepare dyestuff and/or pigment composition particles which possess an essentially round shape by spraying a dispersion of a molten wax composition and dyestuff and/or pigment particles, the dyestuff and/or pigment composition particles being completely moistened by the wax composition. However, the dyestuff and/or pigment composition particles of dimensions such that, when these compositions are used in thermoplastics, the strength characteristics of the shaped products, such as films and fibres, will adversely be influenced.

This drawback will be removed by the composition according to the invention. The amount of wax composition, present in the obtained particles, to be added to the substance to be coloured can moreover be very small.

The dyestuff and/or pigment composition particles are de-agglomerated.

Appropriately, the dyestuff and/or pigment composition particles are de-agglomerated to a size of at most 15 »m, preferably at most 10 »m. Preferably, the dyestuff and/or pigment composition particles are subjected to a mechanical comminution. This can be effected by grinding using glass or steel balls.

More particularly, the dispersion is carried out using a bead mill or a triple roller.

Appropriately, the dyestuff and/or pigment composition particles have a particle size smaller than 5 »m. Such small dimensions make it possible to form a stable dispersion in a small amount of wax composition.

Preferably, this wax composition is chosen from compound which are used when processing plastics which contain a dyestuff composition, and do not have an adverse effect on the characteristics thereof.

The wax composition to be used in the method of the invention is chosen, more particularly, from the waxes having a melting point in the range from 50 to 100°C. Examples of such waxes are stearylamide, ethylene-bis-stearylamide, stearic acid esters of pentaerythritol, glycol monostearates and hydroxystearate waxes, such as methyl hydroxystearate and ethylene glycol monohydroxystearate. However, other waxes having a melting point in the said range can also be used.

The concentration of the dyestuff particles is appreciably higher compared with the concentration customary hitherto and is apparent from the fact that the colouring power to be obtained is appreciably greater. Of course, this high concentration offers advantages when colouring plastics, in particular thermoplastics. In addition to the fact that, because of the high concentration of the composition, less composition has to be added to obtain a given colour effect, less carrier material is also added to the product to be coloured.

Finally, the invention relates to a method for extruding or injection moulding and colouring thermoplastic articles, in particular fims and/or fibres, with which a thermoplastic is mixed with a dyestuff and/or pigment composition, which method is characterized in that a dyestuff and/or pigment composition prepared according to the invention is used.

The invention will be illustrated in more detail with reference to the following illustrative embodiments.

### EXAMPLE I (for comparison)

30 kg of phthalocyanine blue particles are added to 70 kg of a molten wax in the form of glycerol monostearate and the pigment is dispersed with the aid of a bead mill. Dispersing is continued until a particle size of at most 5 »m is obtained. This dispersion is then sprayed and, by cooling, a concentrated pigment/wax composition in particle form is obtained which contains 30% of pigment and is particularly suitable for use in plastic fibres and plastic films. Articles coloured in this way have a very homogeneous colour.

In contrast, the pigment present in a similar pigment/wax composition obtained without treatment with a bead mill has a lesser colouring power, so that to obtain a given colour when colouring plastics less composition, and therefore less of the wax, has to be added when using a dyestuff composition according to the invention.

### EXAMPLE II

A spinel pigment such as nickel titanium yellow from Bayer (Bayer Lichtgelb 8G or Bayer Lightfast Yellow 8 G) is finely ground in water until a particle size of at most 5 »m is obtained. This paste is stable and is only just fluid.

Equal parts of dyestuff paste and a plastic emulsion, consisting of polystyrene and water, are then mixed intensively. By this means the two disperse phases are mixed, with the formation of a new phase. The aqueous phase is removed and a mass is obtained in which the pigment has remained finely dispersed, and therefore no renewed agglomeration has taken place. This mass is brought into powder form and the particles are introduced into a wax melt, as indicated in Example I. The product obtained has a very high degree of dispersion and is particularly suitable for colouring thermoplastics from which, for example, fibres or films are produced.

The product obtained according to this example contains 90% of pigment, while a similar composition prepared by direct dispersion of the dyestuff in the wax melt to a particle size of at most 5 »m contains only 60% of nickel titanium yellow.

### EXAMPLE III

A spinel pigment such as nickel titanium yellow from Bayer (Bayer Lichtgelb 8G or Bayer Lightfast Yellow 8 G) is finely ground in water until a particle size of at most 5 »m is obtained. This paste is stable and is only just fluid.

Equal parts of dyestuff paste and a plastic emulsion, consisting of polystyrene and water, are then mixed intensively. By this means the two disperse phases are mixed, with the formation of a new phase. The aqueous phase is removed and a mass is obtained in which the pigment has remained finely dispersed, and therefore no renewed agglomeration has taken place. This mass is brought into powder form and the particles thus obtained are particular suitable for colouring thermoplastics such as polystyrene, polycarbonate, polyvinylchloride, and do not fade at elevated temperatures.

## Claims

1. A method for the production of a pulverulent composition containing dyestuff or pigment particles, by mixing an aqueous paste containing said particles with a plastic emulsion and removing water from said mass, characterized in that an aqueous paste containing dyestuff and/or pigment composition particles is obtained by finely grinding dyestuff and/or pigment particles in water to form a stable suspension or paste having said particles in a de-agglomerated state, and wherein, after said mixing with a plastic emulsion followed by said removal of water, said mass is pulverized and mixed with a molten wax to form a mixture of said molten wax and said particles; spraying the thus obtained mixture of molten wax and said particles and solidifying said mixture in particulate form.

2. A method according to claim 1, characterized in that the dyestuff and/or pigment composition particles are de-agglomerated to a size of at most 15 »m.

3. A method according to claim 1 or 2, characterized in that the dyestuff and/or pigment composition particles are de-agglomerated to a size of at most 10 »m.

4. A method according to claim 1, 2 or 3 characterized in that the dyestuff and/or pigment composition particles are de-agglomerated to a size smaller than 5 »m.

5. A method according to claim 1, characterized in that the plastic is chosen from polystyrene, polyethene, polyvinyl chloride and polyvinyl acetate.

6. A method according to claims 1 - 4, characterized in that the dyestuff or the pigment is chosen from spinel pig ments, carbon black and organic pigments, and transparent iron oxide.

7. A method according to claim 1, characterized in that the wax composition is chosen from waxes having a melting point of from 50 to 100°C which are used when processing plastics containing a dyestuff and/or pigment composition and do not adversely affect the characteristics of the plastics concerned.

8. A method according to claim 7, characterized in that the wax composition is chosen from stearic acid esters of pentaerythritol, glycol monostearate and hydroxystearate waxes.

9. A method for extruding or injection moulding and colouring thermoplastic articles, the thermoplastic being mixed with a dyestuff and/or pigment composition, characterized in that a dyestuff and/or pigment composition prepared according to claim 8 is used.

## Patentansprüche

1. Ein Verfahren zur Herstellung einer pulverförmigen Mischung, die Färbemittel- oder Pigmentteilchen enthält, indem eine wäßrige Paste, die besagte Teilchen enthält, mit einer Kunststoffemulsion vermischt wird, und indem Wasser von besagter Masse entfernt wird,
dadurch gekennzeichnet, daß eine wäßrige Paste, die Färbemittel- und/oder Pigmentmischungsteilchen enthält, erhalten wird, indem Färbemittel- und/oder Pigmentteilchen fein in Wasser zerrieben werden, um eine stabile Suspension oder Paste zu bilden, die besagte Teilchen in einem desagglomerierten Zustand hat, und bei dem nach besagtem Mischen mit einer Kunststoffemulsion, auf das besagtes Entfernen von Wasser erfolgt, besagte Masse pulverisiert und mit eine geschmolzenen Wachs gemischt wird, um eine Gemisch aus besagtem geschmolzenem Wachs und besagten Teilchen zu bilden; wobei das demzufolge erhaltene Gemisch aus geschmolzenem Wachs und besagten Teilchen versprüht wird und wobei besagtes Gemisch in aus einzelnen Teilchen bestehender Form verfestigt wird.

2. Ein Verfahren gemäß Anspruch 1,
dadurch gekennzeichnet, daß die Färbemittel- und/oder Pigmentmischungsteilchen bis zu einer Größe von höchstens 15»m desagglomeriert sind.

3. Ein Verfahren gemäß Anspruch 1 oder 2,
dadurch gekennzeichnet, daß die Färbemittel- und/oder Pigmentmischungsteilchen bis zu einer Größe von höchstens 10»m desagglomeriert sind.

4. Ein Verfahren gemäß Anspruch 1, 2 oder 3,
dadurch gekennzeichnet, daß die Färbemittel- und/oder Pigmentmischungsteilchen bis auf eine Größe von weniger als 5»m desagglomeriert sind.

5. Ein Verfahren gemäß Anspruch 1,
dadurch gekennzeichnet, daß der Kunststoff aus Polystyren, Polyethylen, Polyvinylchlorid und Polyvinylacetat gewählt wird.

6. Ein Verfahren gemäß den Ansprüchen 1 bis 4,
dadurch gekennzeichnet, daß das Färbemittel oder das Pigment aus Spinnelpigmenten, Kohlenschwärze und organischen Pigmenten sowie transparentem Eisenoxid ausgewählt wird.

7. Ein Verfahren gemäß Anspruch 1,
dadurch gekennzeichnet, daß die Wachsmischung aus Wachsen gewählt wird, die einen Schmelzpunkt von 50°C bis 100°C haben, und die bei der Verarbeitung von Kunststoffmaterialien verwendet werden, die eine Färbemittel- und/oder Pigmentmischung enthalten, und die die Eigenschaften der betroffenen Kunststoffmaterialien nicht ungünstig beeinflussen.

8. Ein Verfahren gemäß Anspruch 7,
dadurch gekennzeichnet, daß die Wachsmischung aus Stearinsäureestern aus Pentaerythritol, Glycolmonostearat und Hydroxystearatwachsen gewählt wird.

9. Ein Verfahren zum Extrudieren oder zum Spritzgießen und zum Färben von thermoplastischen Gegenständen, wobei das Thermoplast mit einer Färbemittel- und/oder Pigmentmischung vermischt wird,
dadurch gekennzeichnet, daß eine Färbemittel- und/oder Pigmentmischung verwendet wird, die gemäß Anspruch 8 zubereitet ist.

## Revendications

1. Procédé pour la production d'une composition pulvérulente contenant des particules de colorant ou de pigment, comprenant de mélanger une pâte aqueuse contenant lesdites particules avec une émulsion de plastique et en retirant l'eau de ladite masse, caractérisé en ce qu'une pâte aqueuse contenant les particules de composition de colorant et/ou de pigment est obtenue en broyant finement des particules de colorant et/ou de pigment dans de l'eau pour former une suspension stable ou une pâte ayant lesdites particules dans un état désaggloméré, et dans lequel, après ledit mélange avec une émulsion de plastique suivi dudit retrait de l'eau, ladite masse est pulvérisée et mélangée avec une cire fondue pour former un mélange de ladite cire fondue et desdites particules ; pulvériser le mélange ainsi obtenu de cire fondue et desdites particules et solidifier ledit mélange sous forme particulaire.

2. Procédé selon la revendication 1, caractérisé en ce que les particules de composition de colorant et/ou de pigment sont désagglomérées à une taille maximale de 15 »m.

3. Procédé selon la revendication 1 ou la revendication 2, caractérisé en ce que les particules de composition de colorant et/ou de pigment sont désagglomérées à une taille maximale de 10 »m.

4. Procédé selon les revendications 1, 2 ou 3, caractérisé en ce que les particules de composition de colorant et/ou de pigment sont désagglomérées à une taille maximale de 5 »m.

5. Procédé selon la revendication 1, caractérisé en ce que le plastique est choisi dans le groupe formé du polystyrène, polyéthène, chlorure de polyvinyle et polyacétate de vinyle.

6. Procédé selon les revendications 1 à 4, caractérisé en ce que le colorant ou le pigment est choisi dans le groupe formé des pigments de spinelle, des pigments organiques et de noir de charbon, et d'oxyde ferrique transparent.

7. Procédé selon la revendication 1, caractérisé en ce que la composition de cire est choisie dans les cires ayant un point de fusion situé entre 50 et 100°C qui sont utilisés lors du traitement des plastiques contenant une composition de colorant et/ou de pigment et qui n'affectent pas de manière désavantageuse les caractéristiques des plastiques concernés.

8. Procédé selon la revendication 7, caractérisé en ce que la composition de cire est choisie dans le groupe formé des esters d'acide stéarique de pentaerythritol, de glycolmonostearate et de cires d'hydroxystearate.

9. Procédé d'extrusion ou de moulage par injection et de coloration d'articles en thermoplastique, le thermoplastique étant mélangé avec une composition de colorant et/ou de pigment, caractérisé en ce qu'une composition de colorant et/ou de pigment préparée selon la revendication 8 est utilisée.
